# EUROPEAN PATENT APPLICATION

(11) **EP 3 572 783 A1**
(43) Date of publication of application: **27.11.2019**
(21) Application number: 19176427.3
(22) Date of filing: 24.05.2019
(51) Int. Cl.: G01M 11/00

(54) **PORTABLE DEVICE FOR PRODUCING A UNIFORM UV-LIGHT BEAM WITH SMALL ANGULAR SIZE**

(30) Priority: 24.05.2018 EP 18173967
(71) Applicant: Media Lario s.r.l., 23842 Bosisio Parini (LC) (IT)
(72) Inventor: Marioni, Fabio, 21047 Saronno (Varese) (IT); Valsecchi, Giuseppe, 23848 Oggiono (Lecco) (IT)
(74) Representative: Felber, Josef

(57) **Abstract**

The portable device is determined for measuring the optical quality of telescopes and mirrors. It comprises a light source (1) for emission of a bright ultra-violet beam to produce a large collimated ultra-violet light beam characterized by low angular size at a distance from the light source (1). In particular, the light source (1) is equipped with a coupler (3) for connecting a non-solarizing optical fiber (4) to it, and on the other end of the optical fiber (4), there is a holder (6) with sleeve (5) and pinhole (7) of 2 to 200 micron size. This pinhole (7) allows to bring a uniform, collimated and bright ultra-violet light beam close to a surface to be tested by reflection of the UV-light beam at that surface.

## Description

### FIELD OF INVENTION

This invention is relative to a portable device for producing a highly uniform, highly collimated and highly bright beam of UV-light, at wavelength down to 200 nm and to bring it to a surface in order to test this surface. Such highly collimated beams of UV-light are being used for testing the super smooth surface of X-ray telescopes. The background is this: ATHENA (Advanced Telescope for High-ENergy Astrophysics) is the next high-energy astrophysical mission selected by the European Space Agency for launch in 2028. The X-ray telescope consists of 1062 silicon pore optics (SPO) mirror modules with a target angular resolution of 5 arcsec. Each module must be integrated on a 3 m structure with an accuracy of 1.5 arcsec for alignment and assembly. This industrial and scientific team is developing the alignment and integration process in air of the SPO mirror modules based on ultra-violet imaging at the 12 m focal plane. This technique promises to meet the accuracy requirement while, at the same time, allowing arbitrary integration sequence and mirror module exchangeability. To fully integrate a single mirror module of these 1062 pieces into the mirror structure takes a few hours. The system enables monitoring the telescope point spread function during the planned 3-year integration phase.

### BACKGROUND TO INVENTION

The optics of ATHENA is based on a new technology exploiting the commercial availability of very smooth and thin Silicon wafers developed by ESA during the last decade. This technology, called Silicon Pore Optics (SPO), allows the realization of stacks of few tens of curved grazing incidence mirrors obtained from the polished side of the wafer and kept separated by thin ribs machined on the back side of that wafer. The space between ribs are channels ("pores") through which the X-ray radiation enters the optics and is reflected at grazing incidence by the coated polished surface of the wafer, consisting of many SPO elements in a stack.

If the wafer mirrors are properly conformed, a pair of SPO stacks, one with parabolic-shaped surface followed by one with hyperbolic-shaped surface, can be aligned to realize a so-called Wolter configuration often used in X-ray telescopes. In the case of ATHENA, each stack has dimensions ranging between 20.6 mm and 110.0 mm in length and between 49.0 mm and 101.7 mm in width. The height of the stacks is defined by the number of plates, typically 34 for a total of about 68. The set of two pairs of parabolic and hyperbolic stacks, properly aligned and integrated on a support structure called bracket, composes what is called a Mirror Module (MM).

The current configuration of the ATHENA telescope consists of 1062 of such mirror modules, all with the same focal length of 12 m, tesselleted over a physical aperture with a baseline diameter of 3 m. Each mirror module needs to be aligned and integrated on the overall 3 m supporting structure made of Titanium alloy. The integration process must guarantee a co-alignment of the full set of mirror modules within an uncertainty low enough to limit the degradation of the angular resolution of the final telescope. Since the requirement for the latter is 5 arcsec Half Energy Width (HEW), the error budget allocated for the uncertainty due to alignment and integration of the entire mirror modules population has been set to 1.5 arcsec. Moreover, there is a specification on the maximum loss of effective area of the telescope, which is set to 1%.

One of the proposed approaches for reaching this goal is based on the ultra-violet imaging at 218 nm of each mirror module on the 12 m focal plane. Despite the rather high diffraction induced by the narrow channels present in each SPO stack, of the order of 1 arcmin in the direction orthogonal to the stack, it has been demonstrated that the position of the centroid of the point spread function (PSF) produced by each mirror module when illuminated by a collimated UV plane wave is accurate enough to be used as reference for the precise alignment of the mirror module itself. After alignment, the mirror modules are fixed to the supporting structure made in Titanium through three dowel pins by means of a space qualified glue.

Therefore, the alignment of the Mirror Modules (MMs), the accuracy and stability of the optical bench and the optical performance of the MMs are crucial. The integration of the MMs also must satisfy additional requirements, including the request for arbitrarily selecting the integration sequence and the MMs exchangeability, independently of the already integrated population. Moreover, the process offers two main advantages since it allows the monitoring of the MMs during adhesive curing with the possibility to finely tune the alignment in real time, and the telescope alignment during the 3-year integration period. Finally, the method for positioning the MMs does not need vacuum infrastructure but only a cleanroom laboratory.

The basic concept on which the proposed alignment and integration approach relies consists of using optical metrology at ultraviolet light to assess the correct alignment of each mirror module. A plane wave at 218 nm wavelength illuminates the mirror module and the position of the centroid of the point spread function on the focal plane is used as figure of merit for the alignment assessment. The cross section of a SPO mirror module consists of a 2-dimenstional array of square channels or pores with typical dimension of 0.83 mm x 0.83 mm each of which focuses the light to the focal plane after a double reflection on the longitudinal profiles. Given the small dimension of the aperture of each pore with respect to the optical wavelength Lambda, a strong diffraction in the order of λ/d ≈ 54 arcsec is expected for d = 0.83 mm. Actually, the optical path is the same for the pores in each row along the azimuthal direction, whereas it varies from row to row along the radial direction, and the optical path difference is in general much larger than Lambda. Thus, interference occurs among the rays in each row, whereas the superposition is nearly incoherent among different rows. A good agreement between simulation and the measurement has been achieved: in particular, the angular separation of 45 arcsec between the diffraction peaks that corresponds to the pore period along azimuth of 1 mm has been verified. A mirror module has been measured both at ultra-violet and X-ray, and the centroids, calculated from the two sets of measurements, have been compared. The tests have been performed on a mirror module provided by ESA and consisting of one parabolic-hyperbolic pair with 34 plates.

The mirror module has been measured at ultra-violet light in the laboratories of applicant; it was installed on an optical bench with its optical axis vertical and illuminated by a 218 nm wavelength plane wave. A CCD camera recorded the point spread function on the focal plane, and the corresponding centroids calculated for the main lobe of the diffraction pattern.

The dimension of each point spread function was determined by the light source size of 4.5 arcsec in diameter along the azimuth (horizontal direction on the page), whereas it is limited by diffraction, with typical angular width of about 54 arcsec, along the radial direction (vertical direction on the page). The same mirror module has also been measured at the PANTER test facility in Munich. The mirror module has been scanned with an X-ray beam at 1.49 keV in vacuum, the corresponding point spread function recorded and the centroid position calculated. The correlation between the two sets of measurements has been done by plotting the azimuthal (horizontal) and radial (vertical) shifts of the centroid from the nominal focus as a function of the position of the illuminated area on the mirror module. The result showed that the standard deviation of the difference between ultra-violet and X-ray centroid position was 0.38 arcsec along azimuth and 0.61 arcsec along the radial direction, well within the specification.

### SHORTCOMINGS

Presently, a UV light beam for a collimator is being used as optical bench to test optical systems, and for obtaining such a beam, a discharge light source is being used, coupled to related lenses and mirrors to bring the beam near the focus of the collimator. At that location, a microscope objective focuses the light beam on a pinhole precisely aligned by using highly precise mechanical translation apparatus. The point of emission of the radiation must physically be located close to the instrument that emits the light, and the adjusting of the light beam mechanically by the use of lenses and mirrors, which require relatively much space, is always a great challenge and tricky : the mechanical equipment for the setting the mirrors and the lenses is very sensitive and time consuming for the precise adjustment. Unintentional touching may disarrange the adjustment and a new adjustment becomes unavoidable which is burdensome. Another shortcoming of that system is the fact that this conventional methods for the alingnment require a focusing mechanism which has a size in the range of 50 to 100 mm. In summary, a device using the known method is technically complex, uneconomical and unwieldy concerning weight and physical size.

An installation which would require less space and which would allow a quicker and accurate pinhole alignment and by which a robust adjustment would be obtained would greatly improve the installation and alignment, and such installation would be very benefical. In particular, in connection with X-ray telescopes consisting of a plurality of silicon pore mirror modules which need to be examined by a UV-light beam, the accuracy of the alignment of the mirror modules is of great importance. For this case of use, a quicker and more stable alignment with less space requirement of the alignment means would be much appreciated, allowing the integration for the mirror modules based on ultra-violet imaging at the 12 m focal plane of the X-ray telescope.

### OBJECT OF THE INVENTION

It is therefore an object of this invention to create a portable device for producing a uniform UV-light beam with small angular size. Such device should enhance the handling of an ultra-violet beam by which the entire accurate requirements for the alignment of that ultra violet beam with a pinhole are being met, and which enhances the precision and stability of the said alignment for the examination of the optical surfaces of the X-ray mirrors.

Thus, it is the main object of the invention, regardless of the application area, to provide a device for ultimately measuring the optical quality of X-ray telescopes using a precision alignment of a UV-beam to a pinhole, by which all the aforementioned disadvantages can be avoided. In particular, the device should be suitable in connection with ultra-violet light sources with wavelengths down to 200 nm with enough brightness, and it should enable a small angular size to be used effectively as sources of collimators on optical benches for metrology and other purposes.

### SUMMARY OF INVENTION

This invention makes use of:
- a UV light source, with high emission in UV,
- a coupler between the UV source and an optical fiber, designed for the specific purpose,
- an optical fiber of a type not affected by solarization effects,
- a specially designed mechanical setup between the optical fiber and the pinhole,
- a pinhole, typically with size between 2 micron and 200 micron,
- a parabolic mirror, coated to reflect UV radiation.
Firstly, the portable device which does comprise all components for producing a UV-light source and to feed it into a pinhole is the first aspect of the invention, and secondarily, the particular way these components are connected and used for examining the surface of mirror-ray mirrors is another topic of this invention.

According to this invention, the portable device for measuring the optical quality of telescopes and mirrors comprises a light source with high emission of ultra-violet light to produce a collimated ultra-violet light beam at a distance from the light source. It is *characterized in that* the light source is equipped with a coupler for connecting a non-solarizing optical fiber to it; on the other end of the optical fiber, there is a holder with sleeve and pinhole of 2 to 200 micron size for bringing a uniform, small and bright ultra-violet light beam that illuminates a parabolic collimator to generate a high quality bright UV plane beam afterwards used to test mirrors for X-Ray applications.

The invention allows the implementation of a uniform bright, small size, diverging source for the collimators used to test large optical systems that require to be illuminated by UV radiation, e.g. in order to minimize the diffraction effects of the optical systems under test, or for any other reason.

An optical fiber that does not solarize, presently available with core diameters not smaller than 400 micron, is aligned in the focus of a bright UV source. As an example, UV Xe discharge with a power of 1000 W or laser driven sources are suitable. The other end of the optical fiber is connected to an optical fiber connector that houses, on its tip, a pinhole, whose size is selected, according to the application, usually in the range 2 to 200 micron. This pinhole is automatically aligned to the core of the optical fiber that determines the angular size of the resulting bright beam. This beam has an emission in a broadband spectrum, e.g. if a laser driven source is used from UV to IR, and surely the emission in UV is down to 200 nm. It has very small angular size, if needed even smaller than 1 arcsec, according to size of the pinhole used and of the focal length of the collimator to which it is coupled. It can be easily brought around because of the presence of the optical fiber and because the overall system has a small size, with a diameter below 10 mm, since the alignment of the pinhole does not require any mechanical stage anymore. Moreover, the optical fiber is flexible and can easily be adapted to any particular situation.

The function of this invention is therefore the possibility to have a UV beam for optical benches to test optical systems that require to be illuminated by UV radiation, previously collimated by a collimator or directly from a diverging source, when UV radiation down to 200 nm wavelength and in case a small angular size are needed. In addition, the emission covers the entire spectrum from UV to IR, usefulf where a visible beacon helps in pre-alignment phases.

The invention will be explained by describing the figures, and its advantages are being discussed in the following. The figures show:
- Figure 1: : A silicon pore optics SPO of a matrix stack arrangement;
- Figure 2: : A pictorial representation of the arrangement of the 1062 mirror modules to form the final primary 3m Ø mirror of the X-Ray telescope;
- Figure 3: : The conventional arrangement for testing the surface of X-Ray mirrors with UV-light;
- Figure 4: : The UV-light source connected to an optical fibre for leading the light to the pinhole;
- Figure 5: : The arrangement between UV-light source and pinhole including an optical fibre to lead the light beam;
- Figure 6: : The pinhole with connected optical fibre, for leading the light to the pinhole, which directs the UV-light to the collimator.

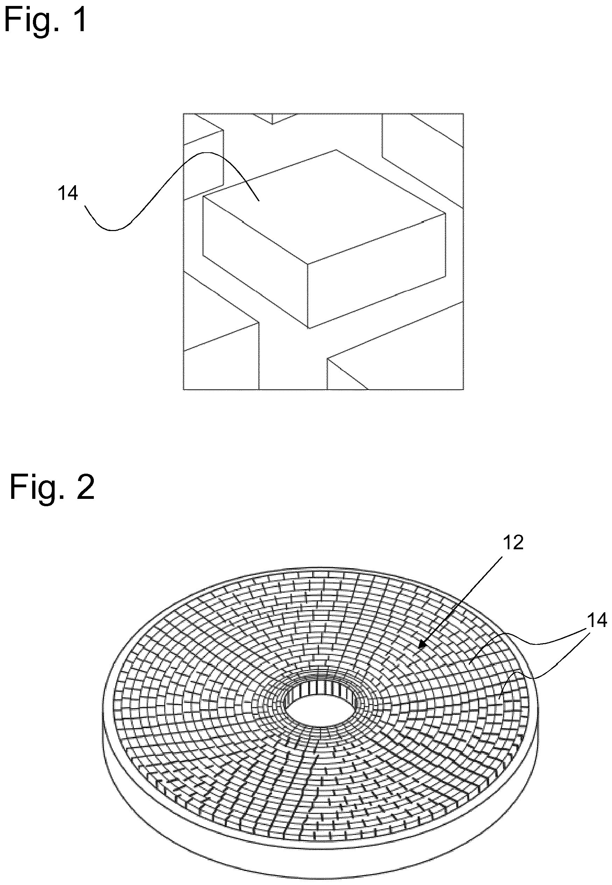

In figure 1, a silicon pore optics SPO 14 of a matrix stack arrangement is shown. An X-ray telescope consists of 1062 such silicon pore optics mirror modules 14 with a target angular resolution of 5 arcsec. Each module 14 must be integrated in a 3 m structure with an accuracy of 1.5 arcsec for alignment and assembly. The industrial and scientific team of the applicant is developing the alignment and integration process of the SPO mirror modules 14 based on ultra-violet imaging at the 12 m focal plane. In figure 2, a pictorial representation of the arrangement of the mirror modules 14 to form an X-Ray mirror 12 is shown. One recognizes the overall mirror shape, but the in essence, one thousand discrete mirror modules 14 are being highly precisely positioned.

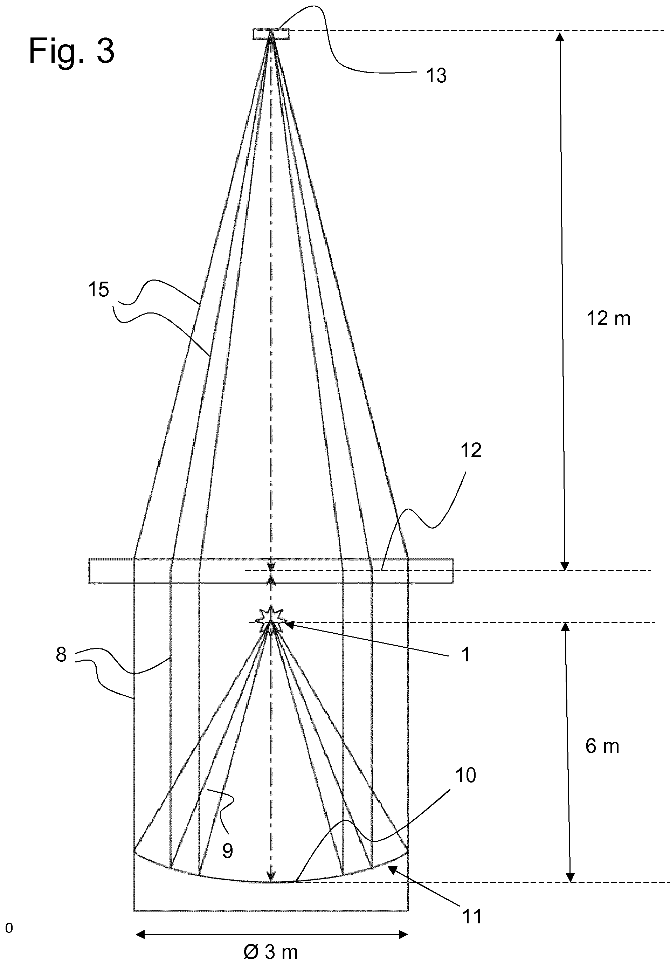

A conventional arrangement for testing the optical surface of such X-Ray mirror 12 is shown in figure 3. There is a UV-light source 1 installed at a particular distance from the surface 10 of the parabolic UV collimator mirror 11. In the shown example, the collimator mirror 11 has a diameter of 3 m and the UV light source 1 is positioned approx. 6 m away from the UV collimator surface 10 in its focal position. The light beams 9 are being reflected at the UV collimator surface 10 and then leave it in parallel beams 8, and will be focussed and bundled by means of the X-ray mirror structure 12 under test. From there, the light beams 15 are directed to a CCD camera 13 which is positioned about 12 m away from the X-ray mirror structure 12. The CCD camera 13 does transform the incoming light with high resolution into electrical signals which can be analysed. The X-ray mirror 12 is affected by strong diffraction effects, but the use of UV wavelength down to 200 nm reduces greatly this undesired effect and allows a precise measurement of the quality of the X-ray mirror 12. This arrangement of the optical bench has shortcomings as explained in section [0010] and [0011].

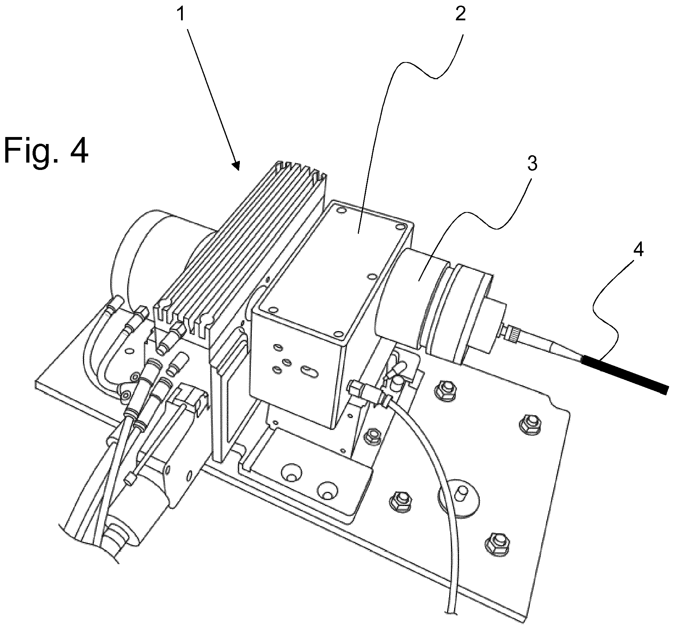

These shortcomings are overcome by a portable device for producing a highly uniform, highly collimated and highly bright beam of UV-light, at wavelength down to 200 nm and to bring the beam to a surface 10 of a parabolic UV collimator mirror 11 as previously described, in order to test X-ray mirrors. This device comprises a UV-light source 1 with a transmitter 2 as shown in figure 4. Preferably, an ultra-violet Xe discharge of 1000 W or a laser driven source is being used. It is advantageous if the optical fiber 4 is aligned in the focus of the ultra-violet light source 1. Following the actual light source emitter 2 there is a coupler 3 which feeds the UV-light beam into a optical fiber 4. The optical fiber 4 is of type not affected by solarization effects that has a core diameter not smaller than 400 micron.

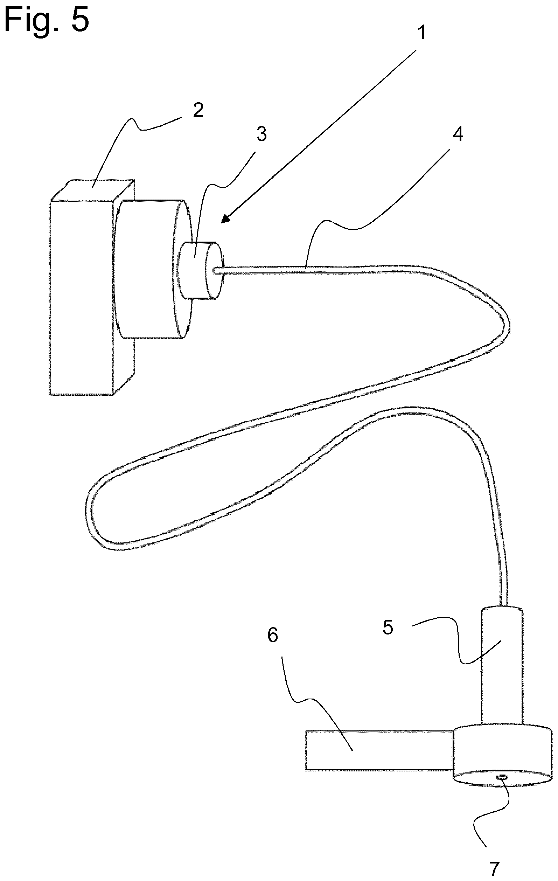

The portable device, according to the invention, is presented in figure 5 entirety. In this schematic view, the ultra-violet light source 1 with its transmitter 2, the coupler 3 and the optical fiber 4 between the light source 1 and the pinhole sleeve 5 with its pinhole 7 are shown. This arrangement enhances the alignment of the light beam of that light source 1 using the pinhole 7 and moving it to whatever position needed, mounted via a holder 6 to a suitable mechanical structure 15. The optical fiber 4 can be lead around curves and extend over several meters and can bring the ultra-violet light beam with a wavelength of down to 200 nm with enough brightness and with a small angular size to the optical systems to be tested. The optical bench therefore functions as a collimator where a light source 1 at 218 nm is placed in the focus of a parabolic mirror 11 that produces a plane wavefront and simulates a source at infinite distance. The illuminated optical systems under test 12 focuses the light into its focal plane, e.g. at 12 m distance, onto a CCD camera 13 (figure 3) that records the point spread function for online processing and calculation of the centroid. The light source 1 is an uncoherent lamp with a broadband emission spectrum between ultra-violet and infrared, and provides a diverging beam wide enough to fully illuminate the complete optical system under test. The physical area from which the light is emitted is diaphragmed to a diameter of 50 µm in this schematics, corresponding to 4.5 arcsec for the 2 m focal length parabolic mirror used to generate the plane wave. The power emitted by the source in the bandwidth of 20 nm centered at 218 nm is in the order of few nanowatt. The detector is a CCD camera 13 with 1024 x 1024 square pixels of 13 µm in size. However, in this application a 2 x 2 pixel binning is used, resulting on an effective pixel size of 26 µm corresponding to 0.45 arcsec over the mirror module focal length on 12 m. The light arriving at the CCD camera 13 is filtered between 208 um and 228 µm.

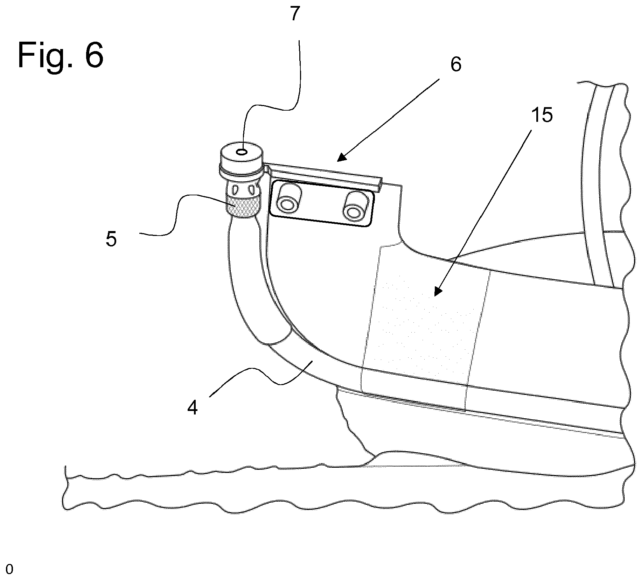

Further, as shown in figure 6, there is a specially designed mechanical setup 15 between the optical fiber 4 and the pinhole 7 which typically has a size between 2 micron and 200 micron, in order to bring the beam to a parabolic mirror 11 which is coated to reflect UV radiation. The pinhole 7 is in the center of a pinhole-holder 5 which can be attached by a holder 6 onto the mechanical setup between the light source 1 and the point where the beam should leave the pinhole 7. The optical fiber connector or sleeve 5 is connected to the optical fiber 4 at its end and facing away from the light source to align the pinhole 7 automatically with the core of the optical fiber 4. To determine an optimally angular size of the resulting light beam, the pinhole 7 preferably has a size between 2 micron and 200 micron. The precise positioning of the pinhole 7 in the focus of the parabolic mirror requires a procedure where inclinometers and a flat calibrated mirror are being used to place the pinhole 7 in autocollimation. The angle is not crucial since the emission from the pinhole covers great angles and is diverging. Mechanical tolerances are sufficient to illuminate the whole collimator mirror.

It was shown that such an arrangement using an optical fiber 4 leads to the advantage of producing a uniform, collimated and bright light beam for a parabolic UV collimator mirror 11 coated to reflect the ultra-violet radiation. In particular, it is possible to bring the point of emission of the radiation physically at great distance from the light source 1 that emits the light through the fiber optics 4 in a simple and effective way and through any path, while the previously known method requires the use of lenses and mirrors which must be ultra-precisely arranged. Therefore, this device allows to produce this precise beam which fulfills these 5 conditions:
1. collimation
2. good quality
3. low angular size
4. brightness
5. down to 200 nm wavelenght
Such a beam is necessary for the measurements of X-ray mirrors. If only one of these five characteristics mentioned above is not ensured, the measurement would no longer be possible.

The physical size of the coupling system between the fiber optics and the pinhole (5,6 and 7 in Fig. 5) can be reduced to 10 mm diameter, while the device according to the previously known method requires a much larger size in the range of a diameter between 50 mm and 100 mm.

The arrangement as presented is highly efficient for measuring the optical quality of telescopes and mirrors. In summary, a uniform, collimated and bright light beam 9 produced by this portable device impacts a coated parabolic UV collimator mirror 11. This parabolic UV collimator mirror 11 reflects the ultra-violet beam 9 which reaches an X-ray mirror under test 12 by which it is directed to a CCD camera 13. This device can also be used for metrology and other purposes. The invention has been implemented secretly with success in UV optical benches that have been used to measure and integrate the demonstrators X-ray space telescopes of Athena for the European Space Agency.

### List of numerals

- 1: light source
- 2: transmitter
- 3: coupler
- 4: optical fiber
- 5: sleeve
- 6: holder
- 7: pinhole
- 8: reflected beam
- 9: emitted beam
- 10: UV collimator surface
- 11: UV collimator mirror
- 12: X-ray mirror structure
- 13: CCD camera
- 14: X-ray mirror module
- 15: Mechanical structure between pinhole and fiber optics

## Claims

1. Portable device for measuring the optical quality of telescopes and mirrors, comprising a light source (1) for high emission of ultra-violet light to produce a collimated ultra-violet light beam (9) at a distance from the light source (1), ***characterized in that*** the light source (1) is equipped with a coupler (3) for connecting a non-solarizing optical fiber (4) to it, and on the other end of the optical fiber (4), there is a holder (6) with sleeve (5) and pinhole (7) of 2 to 200 micron size for bringing a uniform, collimated and bright ultra-violet light beam (9) close to a surface to be tested by reflection of the UV-light beam at that surface.

2. Portable device for measuring the optical quality of telescopes and mirrors according to claim 1, **characterized in that** the light source (1) is laser driven and has as range of wavelengths down to 200 nm, and the holder (6) with sleeve (5) and pinhole (7) that are mounted on a mechanical setup or structure (15) to precisely fix the position of the pinhole (7) for directing the exiting ultra-violet beam onto a surface to be tested.

3. Portable device for measuring the optical quality of telescopes and mirrors according to claim 1, **characterized in that** the light source (1) is a UV Xe discharge with a power of 1000 W and has as range of wavelength down to 200 nm, and the holder (6) with sleeve (5) and pinhole (7) are mounted on a mechanical setup or structure (15) to precisely fix the position of the pinhole (7) for directing the exiting ultra-violet beam onto a surface to be tested.

4. Portable device for measuring the optical quality of telescopes and mirrors according to one of the preceding claims, **characterized in that** the fibre optics (4) has a core diameter not smaller than 400 micron.

5. Portable device for measuring the optical quality of telescopes and mirrors according to one of the preceding claims, **characterized in that** the emission apparatus 5,6,7 has a physical size of between 7 mm to 13 mm in diameter.

6. Use of a portable device for measuring the optical quality of telescopes and mirrors according to one of the preceding claims by precisely positioning the pinhole (7) in the focus of the parabolic mirror by the use of inclinometers and a flat calibrated mirror in order to place the pinhole (7) in autocollimation so the beam emitted from the pinhole (7) sufficiently illuminates the whole collimator mirror.
